(19) Europäisches Patentamt

European Patent Office

Office européen des brevets

(11) EP 1 049 037 A2

(12) EUROPEAN PATENT APPLICATION

(43) Date of publication:
02.11.2000 Bulletin 2000/44

(51) Int. Cl.⁷: G06F 17/60

(21) Application number: 00302293.6

(22) Date of filing: 21.03.2000

(84) Designated Contracting States:
AT BE CH CY DE DK ES FI FR GB GR IE IT LI LU
MC NL PT SE
Designated Extension States:
AL LT LV MK RO SI

(30) Priority: 22.03.1999 US 273673
16.08.1999 US 376737

(71) Applicant: Doyle, John Carroll
Western Springs, Illinois 60558 (US)

(72) Inventor: Doyle, John Carroll
Western Springs, Illinois 60558 (US)

(74) Representative:
Potter, Julian Mark et al
D. Young & Co.,
21 New Fetter Lane
London EC4A 1DA (GB)

Remarks:
Because of a pending dispute it may be possible
that the second priority date is to be changed into
August 17, 1999

(54) **Computer system**

(57) A machine, method for making the machine, method for using the machine, article of manufacture, and products produced by the method using a digital electrical computer in convex futures contract clearing, the method including the steps of: providing a clearing computer system including a digital electrical computer having a processor electrically connected to an input device for receiving input information and producing input electrical signals representing the input information, to an output device for producing a display corresponding to output electrical signals, and to a printing device for printing corresponding to the output electrical signals; and programming the processor to form circuitry in the processor to control the computer system in signal processing responsive to the input electrical signals to produce other electrical signals including the output electrical signals, in data processing substeps of: receiving, as a portion of the input information, a base tick value for a convex futures contract, an expiration time for the convex futures contract, identification of a buyer of the convex futures contract, identification of a seller of the convex futures contract, a trade price for the convex futures contract, and a settlement price for the convex futures contract; computing a discount factor from the settlement price; determining an actual tick value by applying the discount factor to the base tick value; specifying an amount of money a clearing entity must transfer between the buyer and the seller for clearing the convex futures contract by applying the actual tick value to a difference between the trade price data and the settlement price; triggering a computer-assisted transfer of the amount of money; and generating, at the printing device, documentation including the computed amount of money transferred, in clearing the trade of the convex futures contract.

FIG. 2

**Description**

## 1. TECHNICAL FIELD OF THE INVENTION

This invention relates to computer systems, and to programs therefor.
Aspects of the present invention are in the field of digital electrical apparatus and methods for making and using the same, and products produced thereby. A particular aspect of the present invention is directed to a digital electrical apparatus and methods for data processing and data management having particular utility in the field of futures. Another aspect of the present invention pertains to a method for making and using a digital electrical apparatus to process digital electrical signals to for trading and clearing futures contracts with a variable price sensitivity related to the general level of interest rates.

## II. BACKGROUND OF THE INVENTION

For several years now, banks in the United States and in most developed nations have provided interest rate risk management products to their customers in the form of privately negotiated contacts commonly referred to as over the counter derivative contacts. Then contracts have allowed both corporations and individuals to transfer unwanted exposure to changes in the general level of interest rates from themselves to their banks. By helping corporations and individuals manage their exposure to fluctuating interest rates, these derivative contracts have greatly improved the ability of global capital markets to distribute capital more efficiently and at reduced cost to both borrower and lender.

Ultimately, banks aspire to pass on the risk that they received from one customer, to another customer who can benefit from it. There are available today, a variety of financial instruments which are utilized by the banks to help them transact these over the counter derivative contracts. However, the financial instruments, and the computer systems that support the trading of these instruments, are limited in their ability to immunize banks from certain kinds of risks that they have accepted from their customers. As the world witnessed during the fall of 1998, interest rate markets can be very volatile and banks are vulnerable to substantial trading losses and stock valuation declines.

To fully understand the deficiencies in current computer systems that provide support for the trading of financial instruments, a short explanation of the development and structure of those financial instruments is provided. In a typical interest rate derivative transaction, a bank will assume the interest rate exposure that a particular customer has, but does not want. In exchange for this assumption of exposure, the bank will collect a fee. Next, the bank will attempt to find a customer or another financial institution, which desires the exposure, which the bank now has. The ultimate goal of the bank is to intermediate between two customers with opposite needs. For example, the bank would like to find one customer who needs protection from rising interest rates and another customer who needs protection from declining interest rates. The difficulty in this business is timing. Unless the bank can find both customers, and execute simultaneously with both, they are left with interest rate exposure for some period of time. So, typically, after the bank has assumed the exposure of one customer, but before it has had the opportunity to find the second customer with a need for the exposure, the bank will attempt to mitigate the risk associated with this exposure by utilizing one or more financial instruments that are available in the financial markets. These are referred to as hedge instruments. Hedge instruments typically include: United States Treasury bonds and notes; futures contracts on these bonds and notes (traded at The Chicago Board of Trade), and Eurodollar futures contacts (traded at the Chicago Mercantile Exchange). While far from being a perfect hedge, these instruments have proven themselves capable of providing some interim protection from various interest rate risk exposures while the bank seeks to identify a customer who would benefit from said exposure. Once the second customer is identified, the bank will attempt to transfer the exposure to the second customer. If the second customer is agreeable, the bank will then transfer the risk and remove the hedge that it had put on In the form of a purchase (or sale) of notes, bonds, or futures. The bank is then left with two interest rate derivative contracts, providing it with offsetting exposures to movements in interest rates. In effect, the bank has inter mediated between two of its customers, provided each with valuable risk management, and taken a fee for its efforts.

The following discussion is focused on the instruments available in the financial markets today for use by the banks for interim hedging. Each of the currently available instruments has certain advantages and disadvantages. The following evaluation of these instruments is based on two criteria: cost and utility.

Eurodollar futures provide a somewhat effective hedge due to the fact that their price responds to changes in LIBOR interest rates, and most interest rate derivative contacts are designed to transfer LIBOR risk from one entity to another. (LIBOR is an acronym for London Interbank Offered Rate, a benchmark rate published in London every business day, and the most commonly used rate in commercial lending to price floating rate loans.) Eurodollar futures provide a very cost-effective hedge for a bank during the period that a bank seeks to permanently offset their exposure with either another customer or another bank. In addition to being sensitive to changes in LIBOR interest rates, Eurodollar futures have another very valuable design feature. They are designed to cover a period of only three months each, so that a bank can construct a hedge to match the term of its derivative contract. For example, if a bank enters into a derivative contract for a period of thirty months, the bank could buy (or sell) a string of ten Eurodollar futures, starting today and ending thirty months from today, with each contact covering a period of three months. This feature means that Eurodollar futures afford banks the most flexibility when hedging their interest rate risk. A major drawback of Eurodollar futures is the design of the contacts and the computer systems that support their trading and clearing. The systems are designed to allow only for a fixed tick value. In the case of Eurodollars, the tick value is $25.00 per basis point regardless of the general level of interest rates. Another way of describing the limitations of the computer support systems is to say that the computer systems do not allow for a tick that varies with, and is dependent on, the specific discount factor appropriate to the expiration of each futures contract listed. Because of this omission, the systems do not allow the Eurodollar futures to possess the convexity which over the counter derivative contracts possess. This severely limits the utility of these futures contacts.

The next kind of instruments is United States Treasury bonds and notes. These two instruments are identical with the exception of time to maturity. Notes mature in ten years or less while bonds mature in ten years or more. For purposes of this discussion the term "t-notes" refers to both instruments. The primary advantage of t-notes for use as a hedge is that they do possess convexity very similar to the convexity exhibited by derivative contacts. Therefore, a bank utilizing t-notes to hedge its interest rate exposure would not be required to adjust the quantity of t-notes it had bought or sold as interest rates fluctuate from day to day. The primary drawback to t-notes for use as a hedge is that their price responds to changes in United States Treasury interest rates rather than LIBOR interest rates. This is a major problem since the correlation between LIBOR interest rates and treasury interest rates is historically very low. In other words, LIBOR rates can change, affecting the value of the derivative contact, while United States Treasury rates remain unchanged and therefore the value of the hedge remains unchanged. T-notes are commonly utilized to hedge derivative contracts that mature in three years or more. The reason is that, despite the fact that their use leaves a bank exposed to changes in the relationship between LIBOR interest rates and United States Treasury interest rates, they are still preferable to Eurodollar futures and their inherent lack of convexity. The other major problem with the use of t-notes to hedge derivative contracts is their lack of flexibility. Typically, there are just four t-notes available for use as a hedge. There are t-notes maturing in 2, 5, 10, and 30 years. There are, of course, many other t-notes available, but they are difficult to buy and sell efficiently. The four t-notes mentioned above are known as the "on the run" notes and the vast majority of the buying and selling in t-notes involves these four issues.

The third instrument, or group of instruments, is futures contacts on t-notes. These are traded at the Chicago Board of Trade. The use of these contacts to hedge interest rate exposure is very limited due to the fact that these instruments possess the same disadvantages as t-notes but also possess an additional problematic feature known as basis risk. The term "basis risk" refers to the fact that the value of these contracts is based on a formula which causes these contracts to have a very strong relationship with a specific t-note issued by the United States Treasury, and then to switch from time to time to a different specific t-note. This basis risk, along with the drawbacks that these instruments share with t-notes, causes them to be used very rarely by banks as a hedge for interest rate derivatives.

In addition to the hedge instruments in existence and in use for U.S. dollar denominated interest rate derivatives, their are two other hedge instruments available; one for Australian dollar denominated derivatives and one for Deutsche mark denominated derivatives. These are described because they are considered to be prior art.

The London International Financial Futures and Options Exchange (LIFFE) currently offers a product which it calls the LIBOR Financed Bond. This product was created by the LIFFE in an attempt to provide a hedge for Deutsche mark denominated, LIBOR based, interest rate derivatives. The LIBOR Financed Bond exhibits the convexity of an interest rate derivative, like t-notes, while at the same time providing price sensitivity to LIBOR interest rates. The LIBOR Financed Band does not, however, provide the banks with the flexibility that Eurodollar futures do. The LIFFE lists two contracts. One covers an interest period of five years, the other ten years. Compared to the three-month period that the Eurodollar futures cover, the LIBOR Financed Bond contract is considerably less utile.

The other known prior art is the Commonwealth Treasury Bond Future that is listed and traded at the Sydney Futures Exchange (SFE) in Australia. This futures contract is designed to be sensitive to changes in the yield on ten-year and three-year Australian Government Bonds. The contract price is equal to 100 minus the yield on a hypothetical ten year and three year bond. The tick value of this contract varies with the yield of the bond, and the tick values are prescribed in a table published by the SFE. It is this variable tick value which confers upon the contact the convexity which the actual Australian Government Bonds possess. So these contacts posses convexity, which is the quality the inventor herein believes to be desirable, but they are not sensitive to LIBOR interest rates and they do not provide the flexibility that shorter contracts like three-month Eurodollar futures contracts do. Most importantly, the computer systems that support the trading and clearing of this contract do not calculate a LIBOR discount factor for the contact. These systems utilize an unsophisticated table look-up method where the discount factor for every conceivable level of interest rates is already loaded in the memory of the support system computers.

The computer hardware and/or software currently available in the futures industry in this county, and in every county with a developed futures market, was designed to support futures contract trading and clearing with the tick value being held constant .This has been a basic design premise since futures contacts began trading centuries ago.

There is no computer hardware available today which can support the trading and clearing of a futures contract with a variable tick size dependent upon the contact's own settlement price and the settlement price of every contract in the series which expires before said contract. The only known computer system that even comes close to accomplishing a variable tick futures contract is the Commonwealth Treasury Futures contract traded at the Sydney Futures Exchange. However, the tick value of this contact is dependent only upon the settlement price of the contract itself, not any other contract. Therefore, rather than the settlement price being determined by a computer program with a potentially infinite set of inputs, the tick size for any given settlement price is predetermined and available on a table in the computer's memory.

It is therefore an aim of the present invention to alleviate these deficiencies in the prior art by providing a computer system which is configured to provide a variable tick value without referring to a predetermined tick value look-up table.

III. **SUMMARY OF THE INVENTION**

One aspect of the invention relates to an improved computer system for handling futures contracts trading and clearing. The improvement extends the capability of prior systems so as to accommodate and support a new financial product that named the FRA (Forward Rate Agreement) futures contact. A FRA futures contract can provide banks and investment banks with a hedge for their LIBOR interest rate exposure. The FRA futures contract alleviates the deficiencies in existing instruments, as described above, and has the potential to make capital markets and the distribution of capital in the United States and other developed nations more efficient. However, in order to trade and clear the FRA futures contact effectively requires a complex and sophisticated computer system. To fully appreciate the advances made in this computer system requires a brief explanation of the FRA futures contract itself. However, it is noted that the principles of the present invention are applicable to the trading and clearing of futures contacts other than the FRA futures contract. It is further noted that the FRA futures contract, and the computer system which supports the trading and clearing of the FRA futures contract, are applicable to any currency, including, but not limited to, Japanese yen, British pound, French franc, Swiss Franc, Deutsche mark, European Euro, Canadian dollar, Mexican peso, Russian ruble, etc. It is further noted that the FRA futures contract, and the computer system which is required to support the trading and clearing of the FRA futures contract, are applicable to any maturity of LIBOR. The most commonly referenced maturity is three months, but any maturity from one month to twelve months is applicable. It is further noted that the FRA futures contract, and the computer system which can be used to support the trading and clearing of the FRA futures contract, are applicable to any interest rate index. The most commonly referenced index for commercial lending is currently LIBOR, but Prime, Fed funds and commercial paper as used in the over the counter derivatives markets and described by the International Swap Dealers Association Handbook are applicable.

The FRA futures contract provides a completely new financial instrument for banks, and any other potential users, for use in hedging their LIBOR based interest rate exposure in a more cost effective, secure and robust way. The FRA futures contract aims to address all the major needs of a bank which seeks an instrument to hedge its LIBOR based interest rate exposure. The price of the FRA futures contract responds to changes in LIBOR interest rates, like the existing Eurodollar futures contract. Therefore, the user will be less exposed to the low correlation between LIBOR rates and United States Treasury interest rates, as they are currently when utilizing t-notes to hedge their interest rate exposure. The FRA futures contracts, like the existing Eurodollar futures contracts, cover an interest period of just three months each, so that they provide flexibility in constructing a hedge for an interest rate derivative contract. The significant and innovative difference between the FRA futures contract and the Eurodollar futures contract is the Present Value Factor (PVF). By adding this feature to the contract specifications, and applying this PVF to the tick value (dollar value of a minimum change in the price of the futures contract), the critical attribute of convexity is added to this instrument.

In order to understand the role that the PVF plays, it is necessary to understand a little bit about the mechanics of the interest rate derivative market. When a bank enters into an over the counter interest rate derivative contract, the bank agrees to either pay, or be paid, an amount of money based on the prevailing market rate for three month LIBOR on some date in the future. That amount of money is called a floating rate payment. If the bank does not wish to accept the uncertainty regarding what the level of three month LIBOR may be on some date in the future, it will endeavor to hedge its exposure to the rise and fall of three month LIBOR. A popular vehicle for this hedging activity is the Eurodollar futures contract. If a bank had agreed to pay three month LIBOR on September 16th of next year, it could sell an appropriate quantity of September Eurodollar futures as a hedge. This hedge would be effective since the price of Eurodollar futures goes down as the three month LIBOR rate goes up, and any losses incurred by three month LIBOR rising would be offset by the price of September Eurodollars declining. The income statement for the bank on September 16th of next year would show a loss on the over the counter interest rate derivative and an equal, but opposite, gain on the September Eurodollar futures contract. There is a problem, however. The over the counter interest rate derivative contact, which the bank agreed to, requires payment only at the end of the term of the contract, while the

4

Eurodollar futures contact requires payment every day for any gains or losses incurred due the movement in the three month LIBOR rate. In other words, three month LIBOR could rise 10 percent and then fall 10 percent before the over die counter interest rate derivative contract expires and the bank would have no payment obligations under the terms of the over the counter interest rate derivative, while at the same time, the futures exchange would have paid the bank large sums of money when the LIBOR rate rose, and then would have demanded it back as the LIBOR rate went back to its original level. It is these mismatches in cash flows that cause the Eurodollar future to be an inconvenient hedge. Let us examine what would happen if three month LIBOR were to rise 10 percent in June of next year. As three month LIBOR rose 10 percent the September Eurodollar future would decline by a like amount. The bank would be paid a sum of money by the futures exchange on the day that the rate moved. Since banks use the present value concept to report gains and losses on their derivative contracts, the bank would report a gain on their Eurodollar futures position and a loss on their over the counter interest rate derivative position. But, the loss on the derivative contract would be reported as the present value of the expected future cash flow, while the gain on the Eurodollar futures contract would be reported in its entirety. By definition, the loss on the derivative, present valued, would be less than the gain on the Eurodollar futures. It is this present value concept which causes the bank in our example to experience an imbalance between the derivative contract and the Eurodollar hedge. It is also this concept of present value that is employed in aspects of the present invention. The PVF will have the effect of making the gains or losses on the futures contacts equal to the gains and losses on the over the counter interest rate derivative contracts. Thus, instead of having a mismatch in the valuation of the interest rate derivative contract versus the Eurodollar futures contact, the bank would have the valuations of the interest rate derivative and the FRA futures contact exactly offsetting each other. So, to summarize, banks currently experience valuation mismatches between interest rate derivative contacts and Eurodollar futures contacts due to the discounting of future cash flows on the derivative versus the current cash flows on the Eurodollar futures contact. The FRA futures contact has all the same characteristics that a Eurodollar future was designed to include, but adds the critical feature of reducing the cash flows by a discount factor called a PVF. The payment that would be made by the futures clearing entity in the above example would be multiplied by the PVF appropriate for the date of payment and therefore reduced. A data standard for multiple computer communication in implementation of aspects of the invention follows from the clearing computing.

## A. Objects and Advantages

In view of the foregoing, the inventors herein have made a first innovation in the field of futures that has created a need for a second innovation in the field of computer science, the latter being the subject of this patent application. Thus, an object of the invention for which a patent is sought is alleviating some or all of the drawbacks indicated herein by a computerized apparatus and method—all to aid in, and improve over, the efficiency, speed, accuracy, and versatility of prior art systems.

Another aspect of the present invention provides an apparatus (machine), method of making the machine, article of manufacture, necessary intermediate data structures, method of using the machine, and products produced by the method (collectively referenced herein as the method), wherein the method includes using a digital electrical computer in FRA futures contract clearing

Another aspect of the present invention provides or carrying out the method including by providing a clearing computer system including a digital electrical computer having a processor electrically connected to an input device for receiving input information and producing input electrical signals representing the input information, to an output device for producing a display corresponding to output electrical signals, and to a printing device for printing corresponding to the output electrical signals; and programming the processor to form circuitry in the processor to control the computer system in signal processing responsive to the input electrical signals to produce other electrical signals including the output electrical signals.

Another aspect of the present invention provides for carrying out the method in data processing substeps of receiving, as a portion of the input information, a Base Tick Value for a FRA futures contact, an expiration time for the FRA futures contact identification of a buyer of the FRA futures contract, identification of a seller of the FRA futures contract, a trade price for the FRA futures contract, and a settlement price for the FRA futures contact computing a Present Value Factor from the settlement price; determining an Actual Tick Value by applying the Present Value Factor to the Base Tick Value; specifying an amount of money a clearing entity must transfer between the buyer and the seller for clearing the FRA futures contact by applying the Actual Tick Value to a difference between the trade price data and the settlement price; triggering a computer-assisted transfer of the amount of money; and generating, at the printing device, documentation including the computed amount of money transferred, in dealing the trade of the FRA futures contract.

Another aspect of the present invention provides for carrying out the method by applying a bootstrap method to the computing of the Present Value Factor.

Preferably, the method includes determining an Actual Tick Value including applying the Present Value Factor to the Base Tick Value to produce a variable Actual Tick Value.

Preferably, the method includes generating a cumulative price quote for a group including another FRA futures contract by and displaying the cumulative price quote on the display device to convey information for use in trading the group.

Preferably, the method includes generating a price for an option on the FRA futures contract and by displaying the price for the option on the display device to convey information for use in trading the option.

Preferably, the method includes facillitating communicating data representing the FRA futures contract from the clearing computer system to a second digital electrical computer system and by using the data in computing a price for over the counter interest rate derivative contracts.

Preferably, the method includes communicating data representing the FRA futures contract from the clearing computer system to an other digital electrical computer system and by computing, with the other digital electrical computer system, a zero coupon libor curve in real time and applying the zero coupon libor curve to a portfolio of interest rate derivatives to create forward rates, expected cash flows, and present value of the cash flows for risk management manipulation of the portfolio.

Preferably, the method includes calculating, with the other digital electrical computer system, an exposure indicia of movement in the curve.

Preferably, the method includes one or more in combination of the following: publishing daily quotes of the Present Value Factor by clearing digital electrical computer system to provide information for use in trading the FRA futures contract, publishing trading Present Value Factor data in real time on a display board electrically connected to the clearing digital electrical computer system to provide information for use in trading the FRA futures contact, conveying trading Present Value Factor data in real time to a plurality of vendor computers electrically connected to the clearing digital electrical computer system to provide information for use in trading the FRA futures contract, and conveying trading Present Value Factor data in real time to a plurality of broker computers electrically connected to the clearing digital electrical computer system to provide information for use in trading the FRA futures contract.

Preferably, the method includes conveying trading Present Value Factor data in real time to a plurality of customer computers electrically connected to the clearing digital electrical computer system to provide information for use in trading the FRA futures contract—and in response to a trade triggered from one of the customer computers, generating confirmation statement at the clearing digital electrical computer to document the trade triggered from one of the customer computers.

Preferably, the method includes making FRA futures contract documentation made by the foregoing method, especially wherein the method involves applying a bootstrap method to the settlement price.

Preferably, the method includes publishing price data for the FRA futures contract.

## B. Summary of the Invention

A highly preferred aspect of the present invention provides improved digital electrical computer apparatus and method for digital electrical machine-based computing capable of trading and clearing a sophisticated, next generation, futures contract such as the FRA futures contract. In particular, the computer system and method of aspects of the present invention provide machine-computational support for a fixtures contract with a tick value that varies with the general level of interest rates. This fixtures contact would be available to banks and investment banks around the world for use in managing the risk associated with trading in over the counter interest rate derivative contracts.

Another highly preferred aspect of the invention relates to a system performing several functions, which, when performed together, constitute the trading, clearing and settlement of a financial futures contract. Generally the system can accept data from the principles to all transactions consummated (e.g. , on particular day), can keep a running record of each principle's net position in each futures contract, can perform a calculation which determines the price sensitivity of each futures contract to a given change in the price of the futures contracts, and can then calculate the appropriate transfer of funds between the principles involved in buying and selling the contract.

## 1. Determination of the Present Value Factor

At the end of a prescribed period of time, usually one day, a determination can be made as to the closing price for each futures contract, which is traded at a particular exchange or marketplace. This closing price is also known as the settlement price, and can be considered to be a fair representation of the price level that was prevalent in each futures contract at the prescribed time. These settlement prices may be entered into an electronic input device that is connected connected to the clearing computer system. The first calculation to be performed by the clearing computer system utilizes the settlement price of the futures contract whose expiration date is closest to the current date and a LIBOR deposit rate appropriate for the number of days between the current day and the expiration of the FRA futures contract closest to the current date. The calculation, which is detailed below, yields a result that is called the Present Value Factor (PVF). The PVF can determine how much the dollar value of the each FRA futures contract will change for a given price change during the next day of business. Refer to the first PVF as PVF1. The clearing computer repeats the process to determine PVF2 by utilizing the data utilized in the first calculation, plus the settlement price of the futures contract whose expiration is next closest to the current date. The result of this second calculation is labeled PVF2 and also is stored. This process is repeated until there is a PVF for each futures contract listed by the exchange. ('Listed' is a term that means that a contract is available for trading and clearing). In other words, if there are futures contracts traded with expiration dates in March, June, September and December in each of the next ten years, then this calculation is repeated forty times and the results would be PVF1 through PVF40. The PVF's can then be stored in the computer's memory for use in the settlement process the next business day. Once this process has been performed by the clearing computer, then the Actual Tick Value that will be applicable to trades done during the next trading session can be calculated.

## 2. Determination of the Actual Tick Value (ATV)

After the clearing computer system has read the settlement prices for all the futures contracts and performed the calculation that yields the PVF for each of the futures contracts, the clearing computer system can calculate the Actual Tick Value for each futures contract. The ATV can be calculated by multiplying the Base Tick Value, which is maintained in the clearing computer memory, by the PVF. Each futures contract (i.e., March 1999, June 1999, September 1999) is assigned an ATV. The ATV for the futures contract expiring closest to the current date will be labeled ATV1. The ATV will be an integral part of the next step, which will be the calculation of the settlement amount do to/from the buyers and sellers of the futures contracts.

## 3. Determination of the settlement amount

Once the clearing computer system has assigned an ATV to each listed futures contract it can then apply those ATV's to the trading activity of the next trading session. The ATV tells us what the dollar value of a one tick move is going to be during the next trading session. This allows the clearing computer system to calculate a settlement amount for every participant in the market. A settlement amount is the amount of money which must be paid by those individuals or organizations who lost money on any given day, or, the amount of money which will be sent from the clearing entity to those individuals or organizations who made money on any given day. In order to determine this amount, several pieces of information must be either stored in or sent to the clearing computer system: (1) the number of contracts an individual or organization had net bought or sold by the end of the previous day, (2) the number of contracts an individual or organization bought or sold during the current day, (3) the price at which the individual or organization bought or sold during the current day, (4) the settlement price for each futures contract for the previous day, (5) the settlement price for each futures contract for the current day, (6) the Actual Tick Value(ATV) for the current day for each futures contract.

Viewed from a different perspective, an aspect of the invention provides a system which includes using a digital electrical computer in FRA futures contract clearing, the method including the steps of providing a clearing computer system including a digital electrical computer having a processor electrically connected to an input device for receiving input information and producing input electrical signals representing the input information, to an output device for producing a display corresponding to output electrical signals, and to a printing device for printing corresponding to the output electrical signals; and programming the processor to form circuitry in the processor to control the computer system in signal processing responsive to the input electrical signals to produce other electrical signals including the output electrical signals, in data processing substeps of: receiving, as a portion of the input information, a Base Tick Value for a FRA futures contract, an expiration time for the FRA futures contract, identification of a buyer of the FRA futures contract, identification of a seller of the FRA futures contract, a trade price for the FRA futures contract, a settlement price for the FRA futures contract, and the prior day's settlement price for the FRA futures contract; computing a Present Value Factor from the prior day's settlement price; determining an Actual Tick Value by applying the Present Value Factor to the Base Tick Value; specifying an amount of money a clearing entity must transfer between the buyer and the seller for clearing the FRA futures contract by applying the Actual Tick Value to a difference between the trade price data and the settlement price; triggering a computer-assisted transfer of the amount of money; and generating, at the printing device, documentation including the computed amount of money transferred, in clearing the trade of the FRA futures contact.

In the foregoing system, the substep of computing a Present Value Factor can include the substep of applying a bootstrap method to the settlement prices.

In any of the foregoing, the substep of determining an Actual Tick Value can include applying the Present Vale Factor to the Base Tick Value to produce a variable Actual Tick Value.

In any of the foregoing, it is possible to include the substeps at generating a cumulative price quote for a group including another FRA futures contract and displaying the cumulative price quote on the display device to convey information for use in trading the group.

In any of the foregoing, it is also possible to include generating a price for an option on the FRA futures contract and displaying the price for the option on the display device to convey information for use in trading the option.

In any of the foregoing, it is also possible to include communicating data representing the FRA futures contract from the clearing computer system to a second digital electrical computer system; and using the data in computing a price for an over the counter option.

In any of the foregoing, it is further quite viable to include communicating data representing the FRA futures contract from the clearing computer system to an other digital electrical computer system; and computing, with the other digital electrical computer system, a zero coupon libor curve in real time and applying the zero coupon libor curve to a portfolio of interest rate derivatives to create forward rates, expected cash flows, and present value of the cash flows for risk management manipulation of the portfolio.

In any of the foregoing, it is possible to further include calculating, with the other digital electrical computer system, an exposure indicia of movement in the curve.

In any of the foregoing, it is further possible to include one or any combination of the following: publishing daily quotes of the Present Value Factor by clearing digital electrical computer system to provide information for use in trading the FRA futures contract, publishing trading Present Value Factor data in real time on a display board electrically connected to the clearing digital electrical computer system to provide information for use in trading the FRA futures contract, conveying trading Present Value Factor data in real time to a plurality of vendor computers electrically connected to the clearing digital electrical computer system to provide information for use in trading the FRA futures contract, and conveying trading Present Value Factor data in real time to a plurality of broker computers electrically connected to the clearing digital electrical computer system to provide information for use in trading the FRA futures contract.

In any of the foregoing, it is additionally possible to include conveying trading Present Value Factor data in real time to a plurality of customer computers electrically connected to the clearing digital electrical computer system to provide information for use in trading the FRA futures contract; and in response to a trade triggered from one of the customer computers, generating confirmation statement at the clearing digital electrical computer to document the trade triggered from one of the customer computers.

Preferably, the system includes a FRA futures cannot documentation made by the process set out above, especially wherein the substep of computing a Present Value Factor includes applying a bootstrap method to the settlement price. Of course in any of the above, it is best to carry out the publishing as including price data.

## C. Brief Description of the Drawings

An embodiment of the invention will now be described by way of example only with reference to the accompanying drawings, in which:

FIG. 1 is an overview of the structure of an embodiment of the present invention.
FIG. 2 is a diagram depicting the steps carried out in connection with an embodiment of the present invention.

## IV. DETAILED DESCRIPTION OF A PREFERRED EMBODIMENT

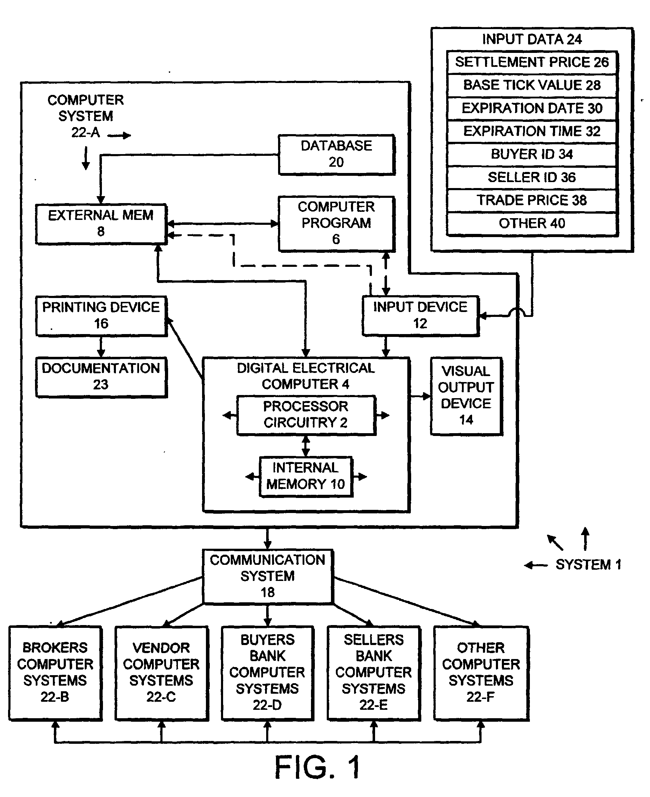

Figure 1 shows, in block diagram form, the computer-based elements that can be utilized to implement a preferred embodiment of the present invention. As shown, the present embodiment involves computer System 1. System 1 can be modeled or carried out on one computer, but in operation, the present embodiment is envisioned as a multiple computer system communicating according to a data standard corresponding to filters discussed subsequently herein. System 1 is thus best viewed as comprised of a plurality of computers such as 22-A, 22-B, 22-C, 22-D, 22-F, etc. Computer System 22-A is provided with a detailed illustration in Fig. 1, with the understanding that Computer System 22-A is representative of Computer Systems 22-B, 22-C, 22-D, 22-F, etc. Computer System 22-A includes Processor Circuitry 2 in a Digital Electrical Computer 4. For flexibility, it is preferable to have the processor circuitry 2 formed preferably by means of a Computer Program 6 (or programs) programming programmable circuitry, i.e., programming the computer (processor). The programming can be carried out with a Computer Program 6, which for flexibility should be in the form of software stored in an External Memory 8, such as a diskette, hard disk, virtual disk, or the like. (The virtual disk is actually an extended Internal Memory 10 that may assist in speeding up computing.) A diskette approach is optional, but it does provide a useful facility for inputting or storing data structures that are a product produced by the host software Computer Program 6 forming Circuitry 2, as well as for inputting a software embodiment of the present invention. Of course, storing the Computer Program 6 in a software medium is optional because the same result can be obtained by replacing the Computer Program 6 in a software medium with a hardware storage device, e.g., by burning the Computer Program 6 into a ROM, using conventional techniques to convert software into an ASIC or FPGA, etc., as would be understood by one having a modicum of skill in the arts of computer science and electrical engineering. (It is well known in the art of computer science that it is a trivial technical exercise to go from specific hardware to software or vice versa. See, for example, James R. Goodman, Todd E. Marlette, and Peter K. Trzyna, "The Alappat Standard for Determining That Programmed Computers are Patentable Subject Matter," J.P.T.O.S. October 1994, Volume 76, No. 10, pages 771 - 786, and James R. Goodman, Todd E. Marlette, and Peter K. Trzyna, "Toward a Fact-based Standard for Determining Whether Programmed Computers are Patentable Subject Matter," J.P.T.O.S. May 1995, Vol. 77, No. 5, pages 353 - 367, both of which are incorporated by reference.) In this regard, it should also be noted that "input" can be carried out by inputting data at Input Device 12 separately read by the Computer 6 under the control of the Computer Program 6, or by inputting information from the Computer Program 6 code itself.

An Internal Memory 10 works in cooperation with the external Memory 8. An Input Device 12 could be a keyboard or equivalent means for a user to input the data discussed below. A Visual Output Device 14 can be employed for a visual representation, and a Printing Device 16 can be employed for producing hard copy output, such as Documentation 22. Note that output electrical data from Circuitry 2 can also be stored to Memory 8 via Computer 4.

For such an embodiment an IBM-compatible PC can be utilized for a small scale implementation or model, or such a computer system as is used at the Chicago Board of Trade can be used, or the like. The Input Device 12, or a representative one of many, can be any ANSI standard terminal, and the Visual Output Device 14 can be a Trinatron color monitor. Still other alternatives include using a network of other computers or a mini-computer or a mainframe system. With such larger scale approaches, the External Memory 8 could be a tape or a CD ROM for data retrieval. A VAX or Microvax system running VMS 5.0 or later is an acceptable approach.

As indicated above, an embodiment could also be carried out in hardware, though this is not recommended as it is an inflexible approach. Accordingly, a hardware implementation is described here for illustrative purposes. Of course it is well known that any digital computer program can be stored in hardware by many approaches, not the least of which is burning it into a ROM. More sophisticated than burning a ROM, but also entirely conventional, is to use techniques to translate the Computer Program 6 into an ASIC or a chip that will carry out the invention in an equivalent manner, and if fact with equivalent circuitry to that formed by programming programmable computer circuitry. It is all just digital electrical circuitry processing digital electrical signals, transforming them to output different electrical signals.

This embodiment of the present invention can be implemented by utilizing a Database 20 of files (or an equivalent e.g., records, a relational database, etc.) pertaining to the present embodiment as discussed herein. In Figure 1, respective dotted lines between Database 20 and Input Device 12, and between Computer Program 6 and Input Device 12 illustrate that the Computer Program 6 and contents of Database 20 can be obtained from data or information input at the Input Device 12, which converts the respective input data or information into respective input electrical signals for handling by the Digital Electrical Computer 4, and Processor 2, including storing the respective digital electrical signals in the Memories 8 and 10. Output electrical data, in the form of digital electrical signals, is generated by the Processor 2 processing the input electrical data in a manner specified by the executable Computer Program 6, such that when operated, the System 1 as a whole produces a tangible presentation, such as that represented in Figure 1 as Documentation 22, including such documents reflecting FRA-type data as a Trade Confirmation. Statement of Open Positions for each member firm, List of Settlement Prices for Futures, List of Settlement Prices for Options, List of Present Value Factors applicable to the next business day, Payment and Collection Advices for the member firms and their banks, Open Interest Report for futures, Open Interest Report for Options, as well as an equity run, reports, P&L cash flows, and other documents showing the identity or kind of the contracts, the number of contracts, and the price for the contracts, etc.

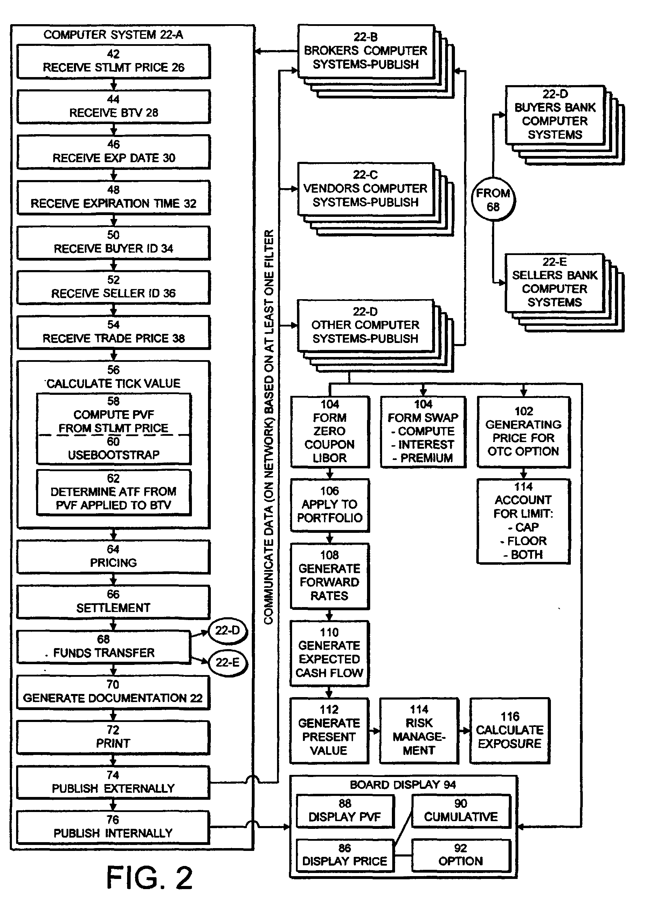

This feature of the embodiment can be carried out by utilizing at least one pointer to insert a computed piece of data into the preformatted text of the above-referenced documentation in the appropriate data file(s). Alternatively, a plurality of pointers can be logically linked so that the output electrical data can be inserted in a plurality of locations in the aforementioned Documentation 22. The Computer Program 6 controlling the Digital Electrical Computer 4 checks for the pointer(s) to ascertain whether any electrical output data should be inserted in generating the Documentation 22. This is preferable to an approach of doing the computing described more particularly in Figure 2 and then manually entering the computed amounts on printed documentation preformatted to accommodate the inserted amounts.

Returning to Figure 2, there can be various kinds of Input Data 24 or information, including Settlement Price Data 26, Base Tick Value Data 28, Expiration Date Data 30, Expiration Time Data 32, Identification of Buyer Data 34, Identification of Seller Data 36, Trade Price Data 38, and Other Data 40, which includes other computer programs, local files (files specific to a particular user and not available to other users), data files corresponding to a user, utilities, reference files, etc.

More particularly, the Input Data 24 can include Settlement Price Data 26, which pertains to data corresponding to the settlement price of the contract. Settlement Price Data 26 includes the price that is determined to be the representative price that last traded when the contract closed at the end of the period of time specified by the exchange (e.g., at the end of every hour, or at a specified time every day).

The Input Data 24 also can include the Base Tick Value Data 28. This includes the base case or unadjusted dollar value for a minimum change in the price of the contract, as prescribed by the exchange where the contract is rested. For example, if the minimum price change is defined to be .01 and the base tick value is $25.00, then a three tick move from 96.03 to 96.06 would result in an unadjusted gain or loss of $75.00.

The Input Data 24 also can include the contract Expiration Date Data 30 and the Expiration Time Data 32. These respectively can include the prescribed date and time when the contract stops trading and settlement must be made.

The Input Data 24 also can include the Identification of Buyer Data 34, which includes the name of the individual or organization that will benefit from an increase in the price of the contract as well as the identification of the clearing firm that is guaranteeing the financial performance of said individual or organization.

The Input Data 24 also can include the Identification of the Seller Data 36, which the name of the individual or organization that will benefit from a decrease in the price of the contact as well as the identification of the clearing firm that is guaranteeing the financial performance of said individual or organization.

The Input Data 24 also can include the Trade Price Data 38: the price at which the buyer and seller agreed to contact the obligation.

The programmed Processor Circuitry 2 uses the Input Data 24, which represents some or all of the information or data input by the user to produce output data in a digital electrical form of a sting of bits which correspond to processed data. Processor Circuitry 2 carries out its operations by using at least one "filter", which can be characterized as an analysis or process restricted by a precise definition. Elements of the definition can be characterized by at least one logical operator or operand to indicate the precise definition or process to be carried out. e.g., whether the union or intersection of two elements or the complement of an element is required. The term "filter" is also applied to the process of applying this definition to change, create, or generate, or exclude data other than that defined from subsequent processing.

Filters are more particularly discussed below with regard to Figure 2, but they define the data standards that permit the computers of System 1 to cooperate. A first filter (see block 58 in Figure 2) includes the clearing Computer 22-A calculating the Present Value Factor (PVF). The filter is defined as follows:

$$PVF = \frac{1}{[1 + R_0(D_0/360)] \times [1 + F_1(D_1/360)] \times ... \times [1 + F_n(D_n/360)]}$$

where

PVF = the Present Value Factor;
$R_0$ = the spot LIBOR* to the first futures expiration;
$D_0$ = is the actual number of days from spot to the first futures contract expiration;
$F_1$ = is the forward rate implied by the first futures contract;
$F_n$ = is the forward rate implied by the last listed futures contract; and
$D_i$ = is the actual number of days in each futures contract period, $i = 1,...,n$

*The term "spot LIBOR" is an industry term that refers to lending rates that are published on page 3750 of the Telerate news service. Telerate publishes lending rates for terms of one week, two weeks, one month, two months, three months, etc. all the way to twelve months. A linear interpolation will be utilized for periods that do not match the terms published on Telerate. The term "spot" is an industry term that refers to a date which is two London business days from the present date. This is a multi-step process carried out for each contract expiration date.

A second filter (see block 62 in Figure 2) is carried out after the PVF has been determined and includes determining the Actual Tick Value (ATV) by multiplying the Base Tick Value (BTV) times the PVF. The result is the ATV. Again, this step is completed once for each listed contract.

A third filter (see block 66 in Figure 2) includes calculating the settlement amount that is due to the buyer from the seller or to seller from the buyer. The calculation is simply a matter of determining if the contract settlement price was above or below the trade price, and then determining how much money is due which party. The filter is defined for the buyers settlement as follows:

$$B = (Ps - Pt)* ATV * 100$$

Where B = Settlement due to (from) buyer,
Ps = settlement price;
Pt = trade price; and
ATV = Actual Tick Value.

The filter is defined for the seller's settlement is as follows:

$$S = (Pt - Ps)* ATV * 100$$

Where S = Settlement due to (from) seller;
Ps = settlement price;
Pt = trade price; and
ATV = Actual Tick Value.

This step is repeated preferably millions of times in a given day.

As part of this calculation of settlement, it is assumed that any contracts that an individual or organization was net long or net short at the end of business the preceding business day, are deemed to be new buys or new sells at the preceding business day's settlement price.

A fourth filter (see block 68 in Figure 2) includes the clearing Computer System 22-A triggering a computer-assisted transfer of funds from the bank accounts of the buyers or sellers who lost money to the bank accounts of the buyers or sellers who made money.

A fifth filter (see block 72 in Figure 2) includes the clearing Computer System 22-A sending output to the Printing Device 16 and to Computer Systems 22-B, 22-C, 22-D, 22-E, 22-F, etc. (for example, terminals in the offices of trading firms who do business wit the clearing corporation of the Computer System 22-A). This output includes a record of each trade, called a confirmation, the settlement price of each contract listed, the PVF's for each contract listed, the open positions, or net longs and/or net shorts, for each contract listed and the settlement amount or amount of money due to, or due from, each trading firm.

And as previously mentioned, Computer System 22-A represents a detailed view of a first computer system, and for the sake of brevity, it should be understood that related computer systems 22-A, 22-B, 22-C, 22-D, 22-E, 22-F, etc. have much the same structure, except of course that the respective computers have respectively programmed processors with corresponding circuitry unique to their functions. Thus, it also should be understood that 22-A, 22-B, 22-C, 22-D, 22-E, 22-F, etc. have respective monitors, input devices, output devices, means for inter-computer communications, e.g., links to Communications System 18, which may include a network (e.g., the Internet an intranet, dedicated lines, etc.) or modem-type inter-computer communication device. Accordingly, the above information can be transmitted in standardized form from the clearing Computer System 22-A via Communications System 18, e.g., modem or other appropriate means. The information is then processed by as illustrated more particularly in FIG. 2, as follows.

Turning now to Figure 2, the present embodiment is illustrated as including an apparatus, method for making the apparatus, and method for using the apparatus. There is shown a computer System 1 in convex futures contract clearing, as well as a method for making digital circuitry, data structures as necessary intermediates, etc. With this understanding, for the sake of brevity, the following discussion is made with reference to the method of use.

The method includes the steps of: providing a clearing Computer System 22-A (including a Digital Electrical Computer 4 having a Processor 4 electrically connected to an Input Device 12 for receiving input information and producing input electrical signals representing the input information, to an Output Device 14 for producing a display corresponding to output electrical signals, and to a Printing Device 16 for printing corresponding to the output electrical signals, all as shown in Figure 1); and programming the Processor 4 to form circuitry in the Processor 4 to control the Computer System 22-A in signal processing responsive to the input electrical signals to produce other electrical signals including the output electrical signals, in data processing substeps of: Receiving 42, as a portion of the input information, a Settlement Price 26; Receiving 44, as a portion of the input information, a Base Tick Value 28 for a convex futures contract Receiving 46, as a portion of the input information, an Expiration Date 30 for the convex futures contract; Receiving 48, as a portion of the input information, an Expiration Time 32 for the convex futures contract Receiving 50, as a portion of the input information, an Identification of a Buyer 34 of the convex futures contract Receiving 52, as a portion of the input information, an Identification of a Seller 36 of the convex futures contact; Receiving 54, as a portion of the input information, a Trade Price 38 for the convex futures contract Computing 56 a Tick Value, including Computing 58 a present value (i.e., discount) factor from the Settlement Price 26; Determining 62 an actual tick value by applying the discount factor to the Base Tick Value 28; Specifying 66 an amount of money a clearing entity must transfer between the buyer and the seller for clearing the convex futures contract by applying the actual tick value to a difference between the trade price data and the settlement price; Triggering 68 a computer-assisted transfer of the amount of money; and generating, at the printing device, documentation including the computed amount of money transferred, in clearing the trade of the convex futures contract.

The foregoing method can be carried out such that the substep of Computing 58 a present value or discount factor includes the substep of Applying 60 a bootstrap method to the Settlement Price 26. Alternatively, or in combination, the foregoing method can be carried out such that the substep of Determining 62 an actual tick value includes applying the present value or discount factor to the Base Tick Value 28 to produce a variable actual tick value. Likewise alternatively, or in combination, the foregoing method can be carried out further including the substeps of: Generating 64 a cumulative price quote for a group including another convex futures contract; and Displaying 86 the Cumulative Price Quote 90 on the Board Display 94 device to convey information for use in trading the group.

Moreover, in any of the foregoing, alternatively, or in combination, the method can be carried out as including Generating 102 (or alternatively as part of Pricing 64) a price for an floor option on the convex futures contract and Displaying 86 the Option Price 92 for the floor option on the display device to convey information for use in trading the floor option. In such a case, the step of Generating 102 a price can include Accounting 114 for a limit, the limit from the group consisting of a cap, a floor, or both, in generating the price.

And in any of the foregoing, alternatively, or in combination, the method can be carried out further including: communicating data representing the convex futures contract from the clearing Computer System 22-A to a second digital electrical Computer System. e.g., 22-B, 22-C, 22-D, 22-E, etc.; and using the data in computing a price for an Over-The-Counter option, as in Generating step 102. Another approach is to utilize the communicated data in Forming 104 an interest rate swap including the convex futures contract can include computing interest payments for the interest rate swap with the second computer, e.g.. 22-B, 22-C, 22-D, 22-E, etc.

Additionally, in any of the foregoing, alternatively, or in combination, the method can be carried out further including: communicating data representing the convex futures contract from the clearing Computer System 22-A to an other digital electrical computer system, e.g., 22-B, 22-C, 22-D, 22-E, etc and Computing 104, with the other digital electrical computer system, e.g., 22-B, 22-C, 22-D, 22-E, etc. a zero coupon libor curve-preferably in real time-and Applying 106 the zero coupon libor curve to a portfolio of interest rate derivatives to Generate 108 forward rates, Generate 110 expected cash flows, and Generate 112 present value of the cash flows, etc. Managing 114 risk in manipulation of the portfolio. In such a case, the method can further include: Calculating 116, with the other digital electrical computer system. e.g., 22-B, 22-C, 22-D, 22-E, etc. an exposure indicia of movement in the curve.

Yet additionally in any of the foregoing, alternatively, or in combination, the method can be carried out further including: Publishing 74 and 76 daily quotes of the discount factor by clearing digital electrical Computer System 22-A to provide information for use in trading the convex futures contract e.g.. Publishing 88 the trading present value or discount factor data in real time on a Board Display 94 electrically connected to the clearing digital electrical Computer System 22-A to provide information for use in trading the convex futures contract conveying trading discount factor data in real time to at least one or preferably a plurality of Vendor Computer Systems 22-C electrically connected to the clearing digital electrical Computer System 22-A to provide information for use in trading the convex futures contract conveying trading discount factor data in real time to at least one and poreferably a plurality of Broker Computer Systems 22-B electrically connected to the clearing digital electrical Computer System 22-A to provide information for use in trading the convex futures contract and/or conveying trading discount factor data in real time to a plurality of Other Computer Systems 22-F, such as customer computers, electrically connected to the clearing digital electrical Computer System 4 to provide information for use in trading the convex futures contract—and in response to a trade triggered from one of the customer computers—Generating 70 Documentation 22, such as a confirmation statement, at the clearing digital electrical Computer System 22-A to document the trade triggered from one of the customer computers.

Preferably, the present embodiment is viewed as extending to convex futures contract Documentation 23 made by the process including: providing a clearing Computer System 22-A including a digital electrical Computer 4 having a Processor 2 electrically connected to an Input Device 12 for receiving input information and producing input electrical signals representing the input information, to an Output Device 14 for producing a display corresponding to output electrical signals, and to a Printing Device 16 for printing corresponding to the output electrical signals; and programming the Processor 2 to form circuitry in the processor to control the Computer System 22-A in signal processing responsive to the input electrical signals to produce other electrical signals including the output electrical signals, in data processing substeps at providing a clearing Computer System 22-A (including a Digital Electrical Computer 4 having a Processor 4 electrically connected to an Input Device 12 for receiving input information and producing input electrical signals representing the input information, to an Output Device 14 for producing a display corresponding to output electrical signals, and to a Printing Device 16 for printing corresponding to the output electrical signals, all as shown in Figure 1); and programming the Processor 4 to form circuitry in the Processor 4 to control the Computer System 22-A in signal processing responsive to the input electrical signals to produce other electrical signals including the output electrical signals, in data processing substeps of: Receiving 42, as a portion of the input information, a Settlement Price 26; Receiving 44, as a portion of the input information, a Base Tick Value 28 for a convex futures contract; Receiving 46, as a portion of the input Information, an Expiration Date 30 for the convex futures contract Receiving 48, as a portion of the input information, an Expiration Time 32 for the convex futures contract Receiving 50, as a portion of the input information, an identification of a Buyer 34 of the convex futures contact Receiving 52, as a portion of the input information, an identification of a Seller 36 of the convex futures contract Receiving 54, as a portion of the input information, a Trade Price 38 for the convex futures contract; Computing 56 a Tick Value, including Computing 58 a present value (i.e., discount) factor from the Settlement Price 26; Determining 62 an actual tick value by applying the discount factor to the Base Tick Value 28; Specifying 66 an amount of money a clearing entity must transfer between the buyer and the seller for dearing the convex futures contact by applying the actual tick value to a difference between the trade price data and the settlement price; Triggering 68 a computer-assisted transfer of the amount of money, and generating, at the printing device, documentation including the computed amount of money transferred, in clearing the trade of the convex futures contact. In such case, the Documentation 23 can be made by the process wherein the substep of Computing 58 a discount factor includes Applying 60 a bootstrap method to the settlement price. However, in any case, preferably, the embodiment extends to Publishing price data, e.g., in blocks 72, 74, 22-B, 22-C, 22-F, etc.

While the above description contains many specificities, these should not be construed as limitations on the scope of the invention, but rather as an exemplification of one preferred embodiment thereof. Many other variations are possible such as, but not limited to, those described in the Objects and Advantages section above. Thus, the scope of the invention should be determined by the appended claims rather than by the principal embodiment and other examples described above.

**Claims**

1. A method for using a digital electrical computer in convex futures contract clearing, the method including the steps of:

    providing a clearing computer system including a digital electrical computer having a processor electrically connected to an input device for receiving input information and producing input electrical signals representing the input information, to an output device for producing a display corresponding to output electrical signals, and to a printing device for printing corresponding to the output electrical signals; and
    programming the processor to form circuitry in the processor to control the computer system in signal processing responsive to the input electrical signals to produce the output electrical signals, in data processing substeps of:
    receiving, as a portion of the input information, a base tick value for a convex futures contract, an expiration time for the convex futures contract, identification of a buyer of the convex futures contract, identification of a seller of the convex futures contract, a trade price for the convex futures contract, and a settlement price for the convex futures contract
    computing a discount factor from the settlement price;
    determining an actual tick value by applying the discount factor to the base tick value;
    specifying an amount of money a clearing entity must transfer between the buyer and the seller for clearing the convex futures contract by applying the actual tick value to a difference between the trade price data and the settlement price;
    triggering a computer-assisted transfer of the amount of money, and
    generating, at the printing device, documentation including the computed amount of money transferred, in clearing the trade of the convex futures contract.

2. The method of claim 1, wherein the substep of computing a discount factor includes the substep of applying a bootstrap method to the settlement price.

3. The method of claim 1, wherein the substep of determining an actual tick value includes applying the discount factor to the base tick value to produce a variable actual tick value.

4. The method of claim 2, further including the substeps of:

    generating a cumulative price quote for a group including another convex futures contract; and
    displaying the cumulative price quote on the display device to convey information for use in trading the group.

5. The method of claim 2, wherein:

    generating a price for an floor option on the convex futures contract; and
    displaying the price for the floor option on the display device to convey information for use in trading the floor option.

6. The method of claim 5, wherein the step of generating a price includes accounting for a limit, the limit from the group consisting of a cap, a floor, or both, in generating the price.

7. The method of claim 2, further including:

   communicating data representing the convex futures contract from the clearing computer system to a second digital electrical computer system; and
   using the data in computing a price for an Over-The-Counter option.

8. The method of claim 7, wherein the forming an interest rate swap including the convex futures contract includes:

   computing interest payments for the interest rate swap with the second computer.

9. The method of claim 2, further including:

   communicating data representing the convex futures contact from the clearing computer system to an other digital electrical computer system; and
   computing, with the other digital electrical computer system, a zero coupon libor curve in real time and applying the zero coupon libor curve to a portfolio of interest rate derivatives to create forward rates, expected cash flows, and present value of the cash flows for risk management manipulation of the portfolio.

10. The method of claim 9, further including:

    calculating, with the other digital electrical computer system, an exposure indicia of movement in the curve.

11. The method of claim 2, further including:

    publishing daily quotes of the discount factor by clearing digital electrical computer system to provide information for use in trading the convex futures contact.

12. The method of claim 2, wherein:

    publishing trading discount factor data in real time on a display board electrically connected to the clearing digital electrical computer system to provide information for use in trading the convex futures contact.

13. The method of claim 2, wherein:

    conveying trading discount factor data in real time to a plurality of vendor computers electrically connected to the clearing digital electrical computer system to provide information for use in trading the convex futures contact.

14. The method of claim 2, wherein:

    conveying trading discount factor data in real time to a plurality of broker computers electrically connected to the clearing digital electrical computer system to provide information for use in trading the convex futures contact.

15. The method of claim 2, wherein:

    conveying trading discount factor data in real time to a plurality of customer computers electrically connected to the clearing digital electrical computer system to provide information for use in trading the convex futures contract; and
    in response to a trade triggered from one of the customer computers, generating confirmation statement at the clearing digital electrical computer to document the trade triggered from one of the customer computers.

16. Convex futures contract documentation made by the process including:

    providing a clearing computer system including a digital electrical computer having a processor electrically connected to an input device for receiving input information and producing input electrical signals representing the input information, to an output device for producing a display corresponding to output electrical signals, and to a printing device for printing corresponding to the output electrical signals; and

programming the processor to form circuitry in the processor to control the computer system in signal processing responsive to the input electrical signals to produce other electrical signals including the output electrical signals, in data processing substeps of:

receiving, as a portion of the input information, a base tick value for a convex futures contract, an expiration time for the convex futures contract, identification of a buyer of the convex futures contract, identification of a seller of the convex futures contract, a trade price for the convex futures contract, and a settlement price for the convex futures contract

computing a discount factor from the settlement price;

determining an actual tick value by applying the discount factor to the base tick value;

specifying an amount of money a clearing entity must transfer between the buyer and the seller for clearing the convex futures contract by applying the actual tick value to a difference between the trade price data and the settlement price;

triggering a computer-assisted transfer of the amount of money; and

generating, at the printing device, documentation including the computed amount of money transferred, in clearing the trade of the convex futures contract.

17. The documentation of claim 16, wherein the substep of computing a discount factor includes applying a bootstrap method to the settlement price.

18. The method of any one of claims 11-15, wherein the publishing includes publishing price data.

19. A method for using a digital electrical computer in forward rate agreement futures contract clearing, the method including the steps of:

providing a clearing computer system including a digital electrical computer having a processor electrically connected to an input device for receiving input information and producing input electrical signals representing the input information, to an output device for producing a display corresponding to output electrical signals, and to a printer device for printing corresponding to the output electrical signals; and

programming the processor to form circuitry in the processor to control the computer system in signal processing responsive to the input electrical signals to produce other electrical signals including the output electrical signals, in data processing substeps of:

receiving, as a portion of the input information, a base tick value for a forward rate agreement futures contract, an expiration time for the forward rate agreement futures contract, identification of a buyer of the FRA futures contract, identification of a seller of the forward rate agreement futures contract, a trade price for the forward rate agreement futures contract, and a settlement price for the forward rate agreement futures contract;

computing a present value factor from the settlement price;

determining an actual tick value by applying the present value factor to the base tick value;

specifying an amount of money a clearing entity must transfer between the buyer and the seller for clearing the forward rate agreement futures contact by applying the actual tick value to a difference between the trade price data and the settlement price;

triggering a computer-assisted transfer of the amount of money; and

generating, at the printing device, documentation including the computed amount of money transferred, in clearing the trade of the forward rate agreement futures contract.

20. A computer program product loadable into the memory of a digital computer, comprising one or more software portions for performing one or more of the steps of Claims 1 to 15 or 19 in any combination or permutation when run on a computer.

21. A computer usable storage medium having a computer program product according to Claim 20 stored thereon.

22. A computer system for use in settling futures contracts tradeable over a plurality of consecutive trading time periods; the system comprising:

means for entering into a database data representative of a contract settlement price at the end of a trading time period for each of a plurality of futures contracts;

an execution environment running a computer program which calculates a discount factor for each of said plurality of contracts and which calculates an actual tick value for each of said contracts by multiplying a base tick value by a respective calculated discount factor; and

means for automatically settling traded futures contracts during the next consecutive trading time period in accordance with said actual tick values.

COMPUTER
SYSTEM
22-A →

DATABASE
20

INPUT DATA 24

| SETTLEMENT PRICE 26 |
| BASE TICK VALUE 28 |
| EXPIRATION DATE 30 |
| EXPIRATION TIME 32 |
| BUYER ID 34 |
| SELLER ID 36 |
| TRADE PRICE 38 |
| OTHER 40 |

EXTERNAL MEM
8

COMPUTER
PROGRAM
6

PRINTING DEVICE
16

INPUT DEVICE
12

DOCUMENTATION
23

DIGITAL ELECTRICAL
COMPUTER 4

PROCESSOR
CIRCUITRY 2

VISUAL
OUTPUT
DEVICE
14

INTERNAL
MEMORY 10

← SYSTEM 1

COMMUNICATION
SYSTEM
18

BROKERS
COMPUTER
SYSTEMS
22-B

VENDOR
COMPUTER
SYSTEMS
22-C

BUYERS
BANK
COMPUTER
SYSTEMS
22-D

SELLERS
BANK
COMPUTER
SYSTEMS
22-E

OTHER
COMPUTER
SYSTEMS
22-F

# FIG. 1

**COMPUTER SYSTEM 22-A**

```
42
RECEIVE STLMT PRICE 26

44
RECEIVE BTV 28

46
RECEIVE EXP DATE 30

48
RECEIVE EXPIRATION TIME 32

50
RECEIVE BUYER ID 34

52
RECEIVE SELLER ID 36

54
RECEIVE TRADE PRICE 38

56
CALCULATE TICK VALUE

    58
    COMPUTE PVF
    FROM STLMT PRICE
    60
    USEBOOTSTRAP

    62
    DETERMINE ATF FROM
    PVF APPLIED TO BTV

64
PRICING

66
SETTLEMENT

68
. FUNDS TRANSFER          (22-D)  (22-E)

70
GENERATE DOCUMENTATION 22

72
PRINT

74
PUBLISH EXTERNALLY

76
PUBLISH INTERNALLY
```

COMMUNICATE DATA (ON NETWORK) BASED ON AT LEAST ONE FILTER

```
22-B
BROKERS COMPUTER
SYSTEMS-PUBLISH

22-C
VENDORS COMPUTER
SYSTEMS-PUBLISH

22-D
OTHER COMPUTER
SYSTEMS-PUBLISH
```

FROM 68

```
22-D
BUYERS BANK
COMPUTER
SYSTEMS

22-E
SELLERS BANK
COMPUTER
SYSTEMS
```

```
104
FORM
ZERO
COUPON
LIBOR

106
APPLY TO
PORTFOLIO

108
GENERATE
FORWARD
RATES

110
GENERATE
EXPECTED
CASH FLOW

112
GENERATE
PRESENT
VALUE
```

```
104
FORM SWAP
- COMPUTE
- INTEREST
- PREMIUM
```

```
102
GENERATING
PRICE FOR
OTC OPTION

114
ACCOUNT
FOR LIMIT:
- CAP
- FLOOR
- BOTH
```

```
114
RISK
MANAGE-
MENT

116
CALCULATE
EXPOSURE
```

**BOARD DISPLAY 94**

```
88
DISPLAY PVF

90
CUMULATIVE

86
DISPLAY PRICE

92
OPTION
```

# FIG. 2